# EUROPEAN PATENT APPLICATION

(11) **EP 2 660 918 A2**
(43) Date of publication of application: **06.11.2013**
(21) Application number: 11854089.7
(22) Date of filing: 28.12.2011
(51) Int. Cl.: H01M 8/12, H01M 8/02, B05C 5/02, B05D 1/26

(54) **SOLID OXIDE FULE CELL, METHOD FOR MANUFACTURING SAME, AND TAPE CASTING DEVICE FOR MANUFACTURING A FUEL ELECTRODE**

(30) Priority: 28.12.2010 KR 20100136730
(71) Applicant: POSCO, Nam-ku, Pohang-shi Kyungsangbuk-do 790-300 (KR)
(72) Inventor: BAE, Hongyoul, Pohang-si Gyeongsangbuk-do 790-751 (KR); SONG, Jung Hoon, Seoul 156-761 (KR); AHN, Jin Soo, Seoul 135-080 (KR); PARK, Young Min, Hwaseong-si Gyeonggi-do 445-320 (KR)
(74) Representative: Zech, Stefan Markus
(86) International application number: PCT/KR2011/010250
(87) International publication number: WO 2012/091460

(57) **Abstract**

Disclosed are a solid oxide fuel cell, a method of fabricating the same, and a tape casting apparatus for fabricating an anode. The solid oxide fuel cell includes an electrolyte film sheet, a cathode, and an anode, and the anode includes a catalyst active layer sheet for inducing a reforming reaction of the supplied fuel. The catalyst active layer sheet is formed by a tape casting method using a plurality of pieces of slurry having different catalyst contents, and the catalyst content within the catalyst active layer sheet is gradually changed in a flow direction of the fuel. In the solid oxide fuel cell, a temperature deviation of a unit cell is minimized by uniformly reforming the fuel in the flow direction of the fuel, thereby improving mechanical and chemical durability.

## Description

### [TECHNICAL FIELD]

The present invention relates to a solid oxide fuel cell, and more particularly, to a solid oxide fuel cell with an improved anode structure for decreasing a temperature deviation during an operation, a method of fabricating the solid oxide fuel cell, and a tape casting apparatus for fabricating an anode.

### [BACKGROUND ART]

A solid oxide fuel cell uses solid oxide as an electrolyte for passing oxygen ions, and is operated at the highest temperature (700°C to 1,000 °C) among various types of currently developed fuel cells, thereby having highest power conversion efficiency.

The solid oxide fuel cell uses hydrocarbon-based fuel, such as methane, natural gas, petroleum gas, and gasoline. Hydrogen has many limitations in fabrication, storage, and delivery, so that hydrocarbon-based fuel is reformed to hydrogen-rich gas with high purity to be used. The fuel reformation is divided into an external reformation method using an external apparatus (reformer), and an internal reformation method performed in a fuel cell itself by using a high temperature during an operation.

The solid oxide fuel cell used by reforming methane by the external reformation method shows a temperature deviation of approximately 150°C at an average operation temperature of 850°C. Further, a solid oxide fuel cell using wet natural gas, such as methane, which is reformed by the internal reformation method represents a sharper temperature deviation than that of the external reformation method. The reason is that since the reformation reaction is an endothermic reaction, a temperature reduction is generated by the sharp reformation reaction in a region receiving the fuel.

The temperature deviation degrades mechanical and chemical durability of the fuel cell, and causes mechanical failure and an excessive chemical reaction of the fuel cell at a high temperature part, thereby resulting in performance deterioration. Further, in a case where dry gas is used instead of wet natural gas, carbon is generated so that a carbon poisoning phenomenon hindering an electrochemical reaction is generated, thereby degrading performance of the fuel cell.

The above information disclosed in this Background section is only for enhancement of understanding of the background of the invention and therefore it may contain information that does not form the prior art that is already known in this country to a person of ordinary skill in the art.

### [DETAILED DESCRIPTION]

### [TECHNICAL PROBLEM]

The present invention has been made in an effort to provide a solid oxide fuel cell capable of improving mechanical and chemical durability and power generation performance by improving an anode structure so that fuel injected in a fuel cell is gradually reformed, and decreasing a temperature deviation of the whole fuel cell, a method of fabricating the solid oxide fuel cell, and a tape casting apparatus for fabricating the anode.

### [TECHNICAL SOLUTION]

An exemplary embodiment of the present invention provides a solid oxide fuel cell including an electrolyte film sheet, a cathode, and an anode, and the anode includes a catalyst active layer sheet for inducing a reforming reaction of supplied fuel. The catalyst active layer sheet may be formed by a tape casting method using a plurality of pieces of slurry having different catalyst contents, and the catalyst content within the catalyst active layer sheet is gradually changed in a flow direction of the fuel.

The catalyst content within the catalyst active layer sheet may be gradually increased in a flow direction of the fuel. The catalyst active layer sheet may include a nickel (Ni) catalyst. The catalyst active layer sheet may be formed of a complex of yttria-stabilized zirconia (YSZ) and nickel (Ni).

The anode may further include a functional layer sheet, which is in close contact with the electrolyte film sheet, and a support layer sheet positioned between the functional layer sheet and the catalyst active layer sheet, and the support layer sheet may have a thickness and porosity larger than those of the functional layer sheet.

Another exemplary embodiment of the present invention provides a method of fabricating a solid oxide fuel cell, including: fabricating an electrolyte film sheet, a functional layer sheet, a support layer sheet, and a catalyst active layer sheet; forming a stack by sequentially stacking the electrolyte film, the functional layer, the support layer, and the catalyst active layer; fabricating an anode including the electrolyte film sheet, the functional layer sheet, the support layer sheet, and the catalyst active layer sheet by sintering the stack; and forming a cathode on the electrolyte film sheet, in which a catalyst content within the catalyst active layer sheet is gradually changed in a predetermined direction.

The electrolyte film sheet, the functional layer sheet, the support layer sheet, and the catalyst active layer sheet may be fabricated by a tape casting method using slurry.

The catalyst active layer sheet may be fabricated by preparing a plurality of pieces of slurry having different catalyst contents, applying the plurality of pieces of slurry, which is mixed with adjacent slurry at a boundary portion with the adjacent slurry to have a gradually changed compositional gradient on a base film in parallel, and then drying the base film, and removing the base film.

The plurality of pieces of slurry may be arranged in an order of high catalyst content and applied on the base film in parallel. The plurality of pieces of slurry may include yttria-stabilized zirconia (YSZ) powder and nickel oxide (NiO) powder, and may be arranged in an order of high content of nickel oxide (NiO) powder and applied on the base film in parallel.

A sintering temperature of the stack may be equal to or higher than 1,300°C and equal to or lower than 1,400 °C.

Yet another exemplary embodiment of the present invention provides a tape casting apparatus for fabricating an anode, including: an upper case and a lower case provided with concave storage spaces at one surfaces facing each other, and coupled with each other; a pair of side dams coupled to side surfaces of the upper case and the lower case to seal the storage spaces; a plurality of separation films installed inside the lower case to separate the storage space into a plurality of regions; and a plurality of slurry injection nozzles installed at any one of the upper case and the lower case while being spaced apart from each other to provide a plurality of pieces of slurry having different catalyst contents to the respective regions of the storage space. A slurry outlet connected with the storage space may be provided at one side of each of the upper case and the lower case.

The plurality of separation films may be positioned at a height lower than that of an uppermost end of the slurry outlet, so that two pieces of adjacent slurry among the plurality of pieces of slurry are mixed together and then discharged through the slurry outlet.

The plurality of separation films may be separably and detachably coupled to the lower case, so that plurality of separation films is replaced with another separation film having a different height or an installation position thereof is changed.

Two slurry injection nozzles positioned at an outermost side among the plurality of slurry injection nozzles may be installed at the pair of side dams.

### [ADVANTAGEOUS EFFECTS]

According to the solid oxide fuel cell according to the present exemplary embodiment, the fuel is not sharply reformed in a specific region, but is uniformly reformed in the flow direction, thereby minimizing a temperature deviation of the unit cell. Accordingly, it is possible to improve mechanical and chemical durability of the unit cell and improve power generation performance. Further, the catalyst active layer sheet of the anode is fabricated by once tape casting process, thereby simplifying a fabrication process.

### [BRIEF DESCRIPTION OF THE DRAWINGS]

FIG. 1 is a schematic diagram of a solid oxide fuel cell according to the present invention.
FIG. 2 is a front view of a catalyst active layer sheet in the solid oxide fuel cell illustrated in FIG. 1.
FIG. 3 is a process flowchart illustrating a method of fabricating the solid oxide fuel cell according to the present invention.
FIG. 4 is an exploded perspective view illustrating a tape casting apparatus for fabricating an anode according to the present invention.
FIG. 5 is a perspective view illustrating a coupling state of the tape casting apparatus illustrated in FIG. 4.
FIG. 6 is a front view illustrating a slurry outlet in the tape casting apparatus illustrated in FIG. 5.

### [BEST MODE]

Hereinafter, a unit cell for a solid oxide fuel cell according to an exemplary embodiment of the present invention will be described with reference to the accompanying drawings. For reference, in the following description, detailed explanation of known related functions and constitutions may be omitted to avoid unnecessarily obscuring the subject matter of the present invention.

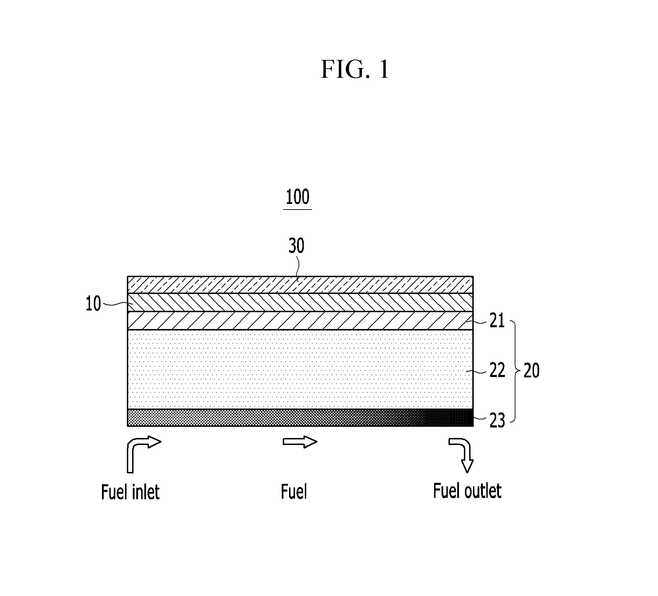

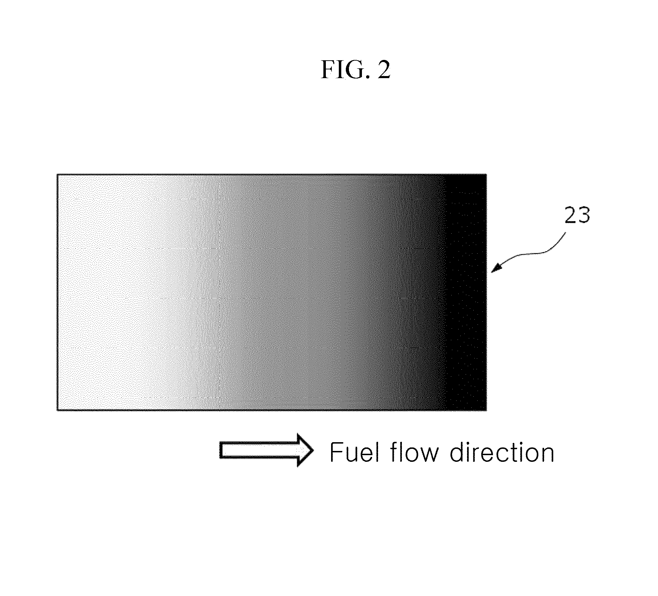

FIG. 1 is a schematic diagram of a solid oxide fuel cell according to the present invention, and FIG. 2 is a front view of a catalyst active layer sheet in the solid oxide fuel cell illustrated in FIG. 1.

Referring to FIGS. 1 and 2, a solid oxide fuel cell includes a plurality of unit cells 100, and each unit cell 100 includes an electrolyte film sheet 10, an anode 20 provided on one surface of the electrolyte film sheet 10, and a cathode 30 provided on the other surface of the electrolyte film sheet. A separation plate (not illustrated) is positioned at an external side of the anode 20 and the cathode 30, and air and fuel are provided to the anode 20 and the cathode 30 through a flow path provided at the separation plate, respectively.

The fuel injected in the solid oxide fuel cell is hydrocarbon-based fuel, such as methane, natural gas, petroleum gas, and gasoline, and is supplied in a non-reformed state. The solid oxide fuel cell is operated by an internal reformation method of reforming fuel in a fuel cell itself by using a high temperature while operating.

The electrolyte film sheet 10 needs to be compactly configured to prevent fuel gas and air from passing through, and needs to be formed of a material having no electronic conductivity but having high oxygen-ion conductivity. In the meantime, the cathode 30 and the anode 20 need to be formed of a porous material to make air and fuel gas be well diffused and supplied, and need to have high electronic conductivity.

A reduction reaction of oxygen is generated in the cathode 30, so that oxygen ion is generated, and the oxygen ion moving to the anode 20 through the electrolyte film sheet 10 is reacted with hydrogen of the anode 20, so that vapor is generated. In this case, electrons are generated in the anode 20, and the electrons are consumed in the cathode 30, so that electricity flows in an external circuit connecting the two electrodes 20 and 30.

The anode 20 includes a support layer sheet 22 for improving mechanical strength of the unit cell, and a catalyst active layer sheet 23 for decreasing a temperature deviation by gradually reforming the received fuel. That is, the anode 20 includes a functional layer sheet 21 which is in contact with the electrolyte film sheet 10 to create an electrochemical reaction, the support layer sheet 22 bonded to the functional layer sheet 21, and the catalyst active layer sheet 23 bonded to the support layer sheet 22.

All of the functional layer sheet 21, the support layer sheet 22, and the catalyst active layer sheet 23 may be formed of a complex of yttria-stabilized zirconia (YSZ) and nickel (Ni).

The support layer sheet 22 is formed to have a thickness larger than that of the functional layer sheet 21 and the catalyst active layer sheet 23 to improve mechanical strength of the unit cell 100, and exhibits larger porosity than that of the functional layer sheet 21 to improve a capability of supplying the fuel gas to the functional layer sheet 21. The catalyst active layer sheet 23 in the anode 20 is farthest positioned from the electrolyte film sheet 10, and faces a flow path of the separation plate to first receive the fuel.

The flow path of the separation plate facing the anode 20 is connected with a fuel inlet and a fuel outlet. Non-reacted fuel and vapor, which is a by-product of the electrochemical reaction, are discharged through the fuel outlet. A predetermined fuel flow direction heading from the fuel inlet to the fuel outlet is present in the catalyst active layer sheet 23.

The yttria-stabilized zirconia (YSZ) within the anode 20 serves to transfer oxygen ions, and the nickel (Ni) serves to move the electrons. Further, the nickel (Ni) generates a smooth internal reforming reaction by an excellent catalyst effect. Accordingly, the fuel provided to the anode 20 is reformed to hydrogen rich gas while moving the catalyst active layer sheet 23, and the hydrogen rich gas is supplied to the functional layer sheet 21 via the support layer sheet 22.

The catalyst active layer sheet 23 is formed so that a catalyst content is gradually changed according to a flow direction of the fuel. That is, the catalyst active layer sheet 23 includes a plurality of regions with different catalyst contents, and the plurality of regions has a compositional gradient gradually changing so as to prevent a boundary between neighboring regions from being divided.

The catalyst content within the catalyst active layer sheet 23 is gradually increased according to the flow direction of the fuel. Accordingly, the catalyst content is lowest in a region closest to the fuel inlet in the catalyst active layer sheet 23, and the catalyst content is highest in a region closest to the fuel outlet. In this case, the catalyst means nickel (Ni).

The fuel is gradually reformed according to the flow direction of the fuel by suppressing the reforming reaction of the fuel in the region first receiving the fuel in the catalyst active layer sheet 23 according to the difference in the catalyst content, and activating the reforming reaction of the fuel as being close to the fuel outlet. The reforming reaction of the fuel is an endothermic reaction, so that a temperature decrease is generated according to a degree of the reforming reaction.

In the solid oxide fuel cell of the present exemplary embodiment, the fuel is not sharply reformed in a specific region, but is uniformly reformed according to the flow direction, thereby minimizing a temperature deviation of the unit cell 100. Accordingly, it is possible to improve mechanical and chemical durability of the unit cell 100 and improve power generation performance by making a whole temperature distribution of the solid oxide fuel cell be uniform.

When it is assumed that the catalyst active layer sheet is formed by connecting different regions having different catalyst contents, a sharp composition change is generated in a boundary portion of the regions, so that the fuel generates a sharp reforming reaction change while moving. However, in the present exemplary embodiment, a discontinuous boundary is not present in the catalyst active layer sheet 23, it is possible to induce the uniform reforming reaction.

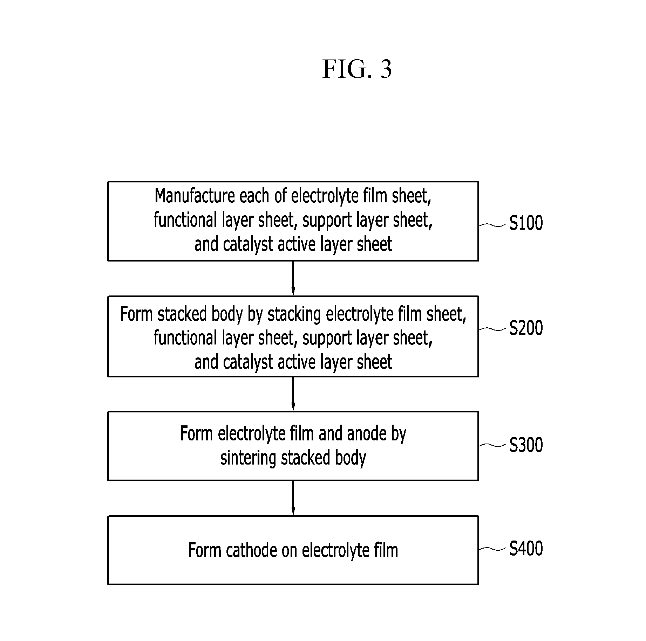

FIG. 3 is a process flowchart illustrating a method of fabricating the solid oxide fuel cell according to the present invention.

Referring to FIG. 3, a method of fabricating the solid oxide fuel cell includes a first step S100 of fabricating an electrolyte film sheet, a functional layer sheet, a support layer sheet, and a catalyst active layer sheet, a second step S200 of forming a stacked body by sequentially stacking the electrolyte film sheet, the functional layer sheet, the support layer sheet, and the catalyst active layer sheet, a third step S300 of fabricating an anode and an electrolyte film sheet including a functional layer sheet, a support layer sheet, and a catalyst active layer sheet by sintering the stacked body, and a fourth step S400 of forming a cathode on the electrolyte film sheet.

In the first step S100, each of the electrolyte film sheet, the functional layer sheet, the support layer sheet, and the catalyst active layer sheet may be fabricated by a tape casting method. The tape casting method includes a process of applying slurry on a base film and drying the base film to fabricate a sheet, cutting the base film and the sheet in a desired size and processing the cut base film and sheet, and then removing the base film.

The slurry for fabricating the electrolyte film sheet may include yttria-stabilized zirconia (YSZ) powder. The slurry for fabricating the functional layer sheet may include yttria-stabilized zirconia (YSZ) powder and nickel oxide powder (NiO). The slurry for fabricating the support layer sheet may include yttria-stabilized zirconia (YSZ) powder, nickel oxide (NiO) powder, and pore former powder.

The electrolyte film sheet, the functional layer sheet, and the support sheet are fabricated by using the slurry of a single composition. Accordingly, the electrolyte film sheet, the functional layer sheet, and the support sheet exhibit the single composition regardless of the flow direction of the fuel. In the meantime, the catalyst active layer sheet is fabricated by once tape casting process by using a plurality of slurry having different catalyst contents, preferably, three or more slurry.

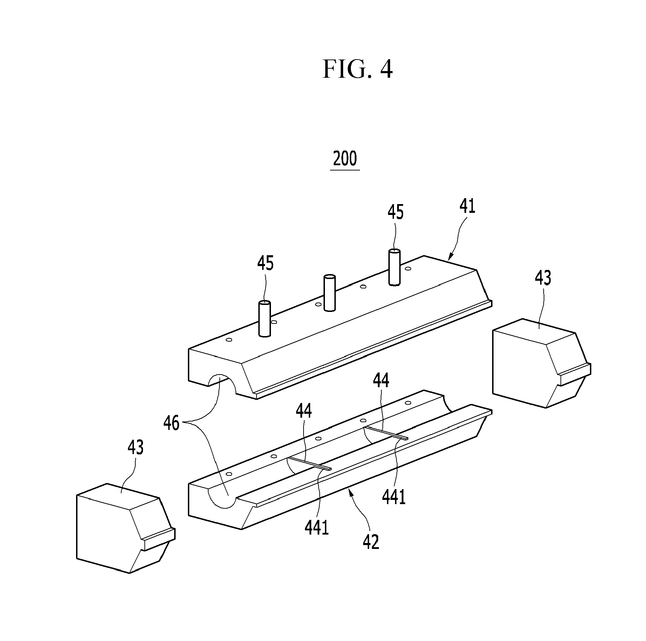

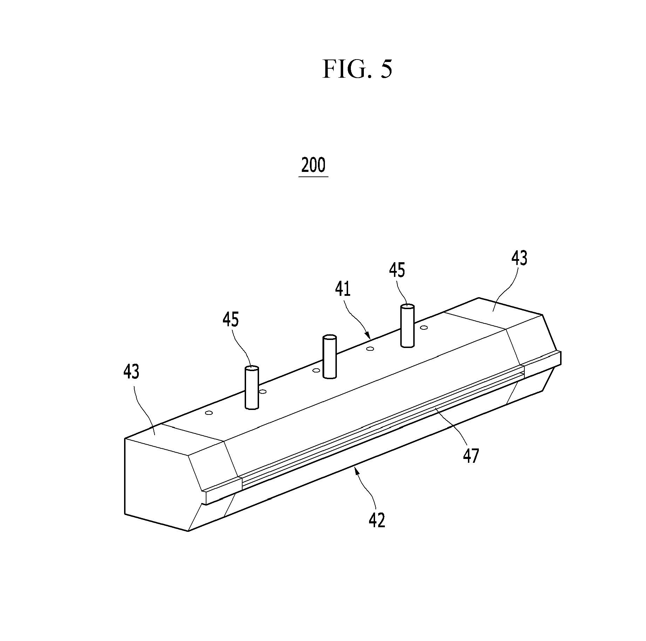

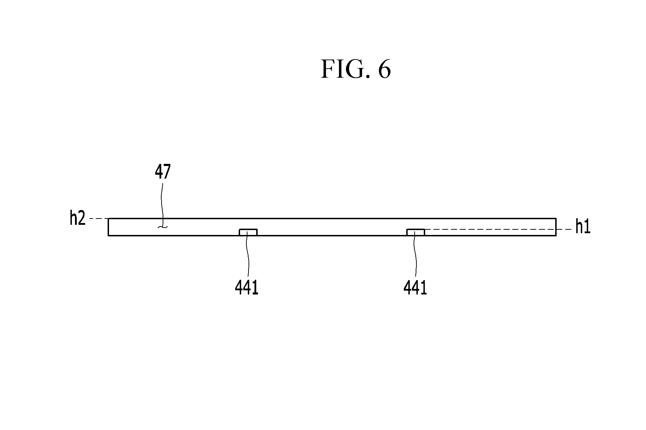

FIGS. 4 and 5 are an exploded perspective view and a perspective view of a coupling state illustrating the tape casting apparatus for manufacturing the catalyst active layer sheet in the solid oxide fuel cell illustrated in FIG. 1, respectively, and FIG. 6 is a front view illustrating the slurry outlet in the tape casting apparatus illustrated in FIG. 5.

Referring to FIGS. 4 to 6, the tape casting apparatus 200 includes an upper case 41, a lower case 42, a pair of side dams 43, and a plurality of separation films 44.

A plurality of slurry injection nozzles 45 is installed in the upper case 41 while having a distance from each other in a longitudinal direction. Further, a concave storage space 46 for storing the received slurry is provided in an internal surface of the upper case 41 and an internal surface of the lower case 42. The storage space 46 is provided in the whole internal surfaces of the upper case 41 and the lower case 42 in the longitudinal direction of the upper case 41 and the lower case 42.

The pair of side dams 43 is combined with side surfaces of the upper case 41 and the lower case 42 to close and seal the storage space 46. A slurry outlet 47 for discharging the slurry is provided at one side of the upper case 41 and the lower case 42. A length of the slurry outlet 47 may be the same as those of the upper case 41 and the lower case 42.

The plurality of separation films 44 is disposed while having a distance from each other in the storage space 46 of the lower case 42 to separate the storage space 46 of the lower case 42 into a plurality of regions having the same number as that of the slurry injection nozzles 45. The separation film 42 may be provided with an extension portion 441 extended toward the slurry outlet 47 of the lower case 42. The separation film 44 and the extension portion 441 are positioned at a height lower than an uppermost end of the slurry outlet 47 to mix two pieces of adjacent slurry on upper portions of the separation film 44 and the extension portion 441.

In FIG. 6, positions of the uppermost ends of the separation film and the extension portion 441 are indicated with h1, and a position of the uppermost end of the slurry outlet 47 is indicated with h2. The separation film and the extension portion 441 are positioned at a height lower than the uppermost end of the slurry outlet 47 to provide a space in which the two pieces of adjacent slurry are mixed on the upper portions of the separation film and the extension portion 441.

FIGS. 4 and 5 illustrate the three slurry injection nozzles 45 as an example, but the number of slurry injection nozzles 45 and the separation films 44 is not limited to the illustrated example.

Further, FIGS. 4 and 5 illustrate a case where the slurry injection nozzle 45 is installed in the upper case 41 as an example, but the slurry injection nozzle 45 may also be installed in the lower case 42. In this case, the slurry injection nozzle 45 may be installed at an opposite side of the slurry outlet 47 based on the drawing, that is, a rear surface of the lower case 42. In the meantime, the two slurry injection nozzles positioned at an outermost side among the plurality of slurry injection nozzles 45 may be installed at the pair of side dams 45, and the center slurry injection nozzle may be installed at any one of the upper case 41 and the lower case 42.

The plurality of pieces of slurry with the different catalyst contents is injected to the tape casting apparatus 200 through the plurality of slurry injection nozzles 45. When it is assumed that first slurry, second slurry, and third slurry are injected in the left, center, and right slurry injection nozzles 45 based on the drawing, respectively, the catalyst contents are higher in an order of the first slurry, the second slurry, and the third slurry, or in an order of the third slurry, the second slurry, and the first slurry.

The plurality of pieces of injected slurry is temporarily stored in the storage space 46 and then applied on the base film through the slurry outlet 47. In this case, the plurality of separation films 44 separates the storage space 46 for each type of slurry, but the separation film 44 is positioned at a height lower than that of the uppermost end of the slurry outlet 47, so that the two pieces of adjacent slurry are mixed together and then discharge to the slurry outlet 47.

Accordingly, the plurality of pieces of slurry coated on the base film in parallel is mixed so that the boundary between the adjacent slurry is not divided, to exhibit a gradually changing compositional gradient. The catalyst active layer sheet in which the catalyst content is gradually changed may be easily fabricated by once tape casting process by using the aforementioned tape casting apparatus 200. The tape casting process enables mass production and is appropriate for fabricating a sheet having a sufficient thickness.

The plurality of separation films 44 is separably and detachably combined with the lower case 42, so that the plurality of separation films 44 may be replaced with another separation film having a different height or an installation position thereof may be changed. Accordingly, it is possible to control a degree by which the slurry is mixed by adjusting the height of the separation film 44, and a size of each slurry coated region may be adjusted by changing the position of the separation film 44.

Referring back to FIG. 3, in the second step S200, the electrolyte film sheet, the functional layer sheet, the support layer sheet, and the catalyst active layer sheet may be sequentially stacked by using an automatic stacking device, and may be preliminarily compressed by using a pressing device. The electrolyte film sheet and the functional layer sheet are provided as one sheet in the stacked body, and the support layer sheet and the catalyst active sheet may be provided as two or more sheets.

In the third step S300, a stack is charged in a sintering furnace to be simultaneously sintered. A sintering temperature of the stack may be equal to or higher than 1,300°C and equal to or lower than 1,400°C. When the sintering temperature is lower than 1,300°C, the stacked body is not sufficiently sintered, thereby decreasing mechanical strength, and compactness of the electrolyte film sheet deteriorates, thereby causing a leakage. In the meantime, when the sintering temperature exceeds than 1,400°C, the stacked body is over sintered, so that porosity within the sintered body is decreased, thereby degrading transfer efficiency of the fuel gas.

Hereinafter, the present invention will be described in more detail through Example. However, the Example below is for exemplifying the present invention, and the present invention is not limited to the Example below.

### <Example>

Electrolyte slurry is fabricated by mixing and grinding a solvent, a binding agent, a plasticizer, and a dispersing agent, and yttria-stabilized zirconia (YSZ) powder, an electrolyte sheet with a thickness of 5 µm to 10 µm is fabricated by using a tape casting method. 8-YSZ including 8 mol% of ittria (Y₂O₃) is used as the yttria-stabilized zirconia (YSZ) powder.

Functional layer sheet slurry is fabricated by mixing and grinding a solvent, a binding agent, a plasticizer, and a dispersing agent, and yttria-stabilized zirconia (YSZ) powder and oxide nickel (NiO) powder, and a functional layer sheet with a thickness of 10 µm to 30 µm is fabricated by using the tape casting method. 8-YSZ including 8 mol% of yittria (Y₂O₃) is used as the yttria-stabilized zirconia (YSZ) powder.

Support layer sheet slurry is fabricated by mixing and grinding a solvent, a binding agent, a plasticizer, and a dispersing agent, and yttria-stabilized zirconia (YSZ) powder, oxide nickel (NiO) powder, and pore former powder, and a support layer sheet with a thickness of 50 µm to 200 µm is fabricated by using the tape casting method. A ratio of yttria-stabilized zirconia (YSZ) powder is 25 wt% to 50wt%, and a ratio of nickel oxide (NiO) is 40 wt% to 70 wt%. The pore former powder includes at least one of carbon black and graphite.

A plurality of pieces of catalyst active layer sheet slurry is fabricated by mixing and grinding a solvent, a binding agent, a plasticizer, and a dispersing agent, and yttria-stabilized zirconia (YSZ) powder, oxide nickel (NiO) powder, and a pore former powder, and a catalyst active layer sheet in which a catalyst content is gradually changed in a predetermined direction is fabricated by using the aforementioned tape casting apparatus. The pore former powder includes at least one of carbon black and graphite.

Three types of slurry having different contents of yttria-stabilized zirconia (YSZ) and contents of oxide nickel (NiO) are used as the plurality of pieces of catalyst active layer sheet slurry. When it is assumed that total weight of the yttria-stabilized zirconia (YSZ) powder, the nickel oxide (NiO) powder, and the pore former powder is 100, ratios of three powder included in the first slurry, the second slurry, and the third slurry are represented in Table 1 below.

**[Table 1]**

| | First slurry | Second slurry | Third slurry |
|---|---|---|---|
| Yttria-stabilized zirconia (YSZ) | 80 wt% | 60 wt% | 40 wt% |
| Nickel oxide (NiO) | 10 wt% | 30 wt% | 50 wt% |
| Pore former | 10 wt% | 10 wt% | 10 wt% |

A thickness of the catalyst active layer sheet is 10 µm to 50 µm, and a discontinuous boundary is not generated between the regions on which the three types of slurry are applied.

The fabricated electrolyte film sheet, functional layer sheet, support layer sheet, and catalyst active layer sheet are sequentially stacked by using the automatic stacking device, and then are integrated to a stack by using a warm iso-static press. The electrolyte film sheet and the functional layer sheet are stacked by each one sheet, the support layer sheet and the catalyst active layer sheet are stacked by each two sheets, and a size of each sheet is 45 cm in a vertical direction and 36 cm in a horizontal direction.

The aforementioned stack is charged in the sintering furnace and simultaneously sintered at 1,300 °C to 1,400 °C. A contraction percentage according to the simultaneous sintering is approximately 18% both in a horizontal direction and a vertical direction, and an edge of a sintered body is removed, and then the unit cell having sizes of 32 cm in the vertical direction, 25 cm in the horizontal direction, and a cross-sectional area of 800 cm² is finally fabricated.

During the process, the unit cells are assembled so that a region, in which the catalyst content is lowest in the catalyst active layer sheet, is positioned to be close to the fuel inlet of the separation plate, and a region, in which the catalyst content is highest, is positioned to be close to the fuel outlet of the separation plate. Accordingly, the catalyst active layer sheet minimizes a temperature deviation of the unit cell by gradually reforming the fuel according to the flow direction of the fuel.

According to the solid oxide fuel cell according to the present exemplary embodiment, the fuel is not sharply reformed in a specific region, but is uniformly reformed in the flow direction, thereby minimizing a temperature deviation of the unit cell. Accordingly, it is possible to improve mechanical and chemical durability of the unit cell and improve power generation performance. Further, the catalyst active layer sheet of the anode is fabricated by once tape casting process, thereby simplifying a fabrication process.

While this invention has been described in connection with what is presently considered to be practical exemplary embodiments, it is to be understood that the invention is not limited to the disclosed embodiments, but, on the contrary, is intended to cover various modifications and equivalent arrangements included within the spirit and scope of the appended claims.

## Claims

1. A solid oxide fuel cell comprising: an electrolyte film sheet, a cathode, and an anode:
wherein the anode includes a catalyst active layer sheet for inducing a reforming reaction of supplied fuel,
the catalyst active layer sheet is formed by a tape casting method using a plurality of pieces of slurry having different catalyst contents, and
the catalyst content within the catalyst active layer sheet is gradually changed in a flow direction of the fuel.

2. The solid oxide fuel cell of claim 1, wherein:
the catalyst content within the catalyst active layer sheet is gradually increased in a flow direction of the fuel.

3. The solid oxide fuel cell of claim 2, wherein:
the catalyst active layer sheet includes a nickel (Ni) catalyst.

4. The solid oxide fuel cell of claim 3, wherein:
the catalyst active layer sheet is formed of a complex of yttria-stabilized zirconia (YSZ) and nickel (Ni).

5. The solid oxide fuel cell of any one of claims 1 to 4, wherein:
the anode further includes a functional layer sheet, which is in close contact with the electrolyte film sheet, and a support layer sheet positioned between the functional layer sheet and the catalyst active layer sheet, and
the support layer sheet has a thickness and porosity larger than those of the functional layer sheet.

6. A method of fabricating a solid oxide fuel cell, comprising:
fabricating an electrolyte film sheet, a functional layer sheet, a support layer sheet, and a catalyst active layer sheet;
forming a stack by sequentially stacking the electrolyte film sheet, the functional layer sheet, the support layer sheet, and the catalyst active layer sheet;
fabricating an anode including the electrolyte film, the functional layer, the support layer, and the catalyst active layer by sintering the stack; and
forming a cathode on the electrolyte film sheet,
wherein a catalyst content within the catalyst active layer sheet is gradually changed in a predetermined direction.

7. The method of claim 6, wherein:
the electrolyte film sheet, the functional layer sheet, the support layer sheet, and the catalyst active layer sheet are fabricated by a tape casting method using slurry.

8. The method of claim 7, wherein:
the catalyst active layer sheet is fabricated by
preparing a plurality of pieces of slurry having different catalyst contents,
applying the plurality of pieces of slurry, which is mixed with adjacent slurry at a boundary portion with the adjacent slurry to have a gradually changed compositional gradient on a base film in parallel, and then drying the base film, and
removing the base film.

9. The method of claim 8, wherein:
the plurality of pieces of slurry is arranged in an order of high catalyst content and applied on the base film in parallel.

10. The method of claim 9, wherein:
the plurality of pieces of slurry includes yttria-stabilized zirconia (YSZ) powder and nickel oxide (NiO) powder, and is arranged in an order of high content of nickel oxide (NiO) powder and applied on the base film in parallel.

11. The method of claim 6, wherein:
a sintering temperature of the stack is equal to or higher than 1,300°C and equal to or lower than 1,400°C.

12. A tape casting apparatus for fabricating an anode, comprising:
an upper case and a lower case provided with concave storage spaces at one surfaces facing each other, and coupled with each other;
a pair of side dams coupled to side surfaces of the upper case and the lower case to seal the storage spaces;
a plurality of separation films installed inside the lower case to separate the storage space into a plurality of regions; and
a plurality of slurry injection nozzles installed at any one of the upper case and the lower case while being spaced apart from each other to provide a plurality of pieces of slurry having different catalyst contents to the respective regions of the storage space,
wherein slurry outlets connected with the storage spaces are provided at one sides of the upper case and the lower case.

13. The tape casting apparatus of claim 12, wherein:
the plurality of separation films is positioned at a height lower than that of an uppermost end of the slurry outlet, so that two pieces of adjacent slurry among the plurality of pieces of slurry are mixed together and then discharged through the slurry outlet.

14. The tape casting apparatus of claim 13, wherein:
the plurality of separation films is separably and detachably coupled to the lower case, so that plurality of separation films is replaced with another separation film having a different height or an installation position thereof is changed.

15. The tape casting apparatus of claim 12, wherein:
two slurry injection nozzles positioned at an outermost side among the plurality of slurry injection nozzles are installed at the pair of side dams.
